# EUROPEAN PATENT SPECIFICATION

(11) **EP 1 925 720 B1**
(45) Date of publication and mention of the grant of the patent: **13.06.2012**
(21) Application number: 07254470.3
(22) Date of filing: 15.11.2007
(51) Int. Cl.: D06M 15/263, A01N 25/10, D06M 15/21, D06M 15/55, D06M 16/00, D06M 11/65, D06M 11/83, D06M 13/352, D06M 15/356, A01N 43/36, A01N 43/48, A01N 43/50, A01N 59/16

(54) **Composition for fabric treatment**
Zusammensetzung zur Faserbehandlung
Composition pour le traitement des tissus

(30) Priority: 20.11.2006 US 860192 P
(43) Date of publication of application: 28.05.2008
(73) Proprietor: Rohm and Haas Company, Philadelphia, PA 19106-2399 (US)
(72) Inventor: Cottrell, Stephanie Nussbaum, Denver North Carolina 28037 (US); Ghosh, Tirthankar, Oreland Pennsylvania 19075 (US)
(74) Representative: Buckley, Guy Julian

(56) References cited:
- EP-A2- 1 584 236
- WO-A2-2006/026573

## Description

The present invention relates to a composition useful for treating fabric. The composition contains a silver-polymer complex which is introduced into a fabric to provide a treated fabric.

Use of a polymer made from an unsaturated heterocyclic monomer to cross-link an epoxy-functional polymer is disclosed in U.S. Patent No. 6,469,097. However, this reference does not teach a silver-containing polymer or a method of treating fabric.

The problem addressed by this invention is to provide a composition that introduces a biocidal material to a fabric to provide a treated fabric resistant to removal of biocide by laundering.

The present invention is directed to a composition useful for treating fabric. The composition comprises: (a) a silver-containing copolymer comprising polymerized units of a monomer X and a monomer Y; wherein monomer X is an ethylenically unsaturated compound having a substituent group selected from an unsaturated or aromatic heterocyclic group having at least one hetero atom selected from N, O and S; alternatively the substituent group is selected from an unsaturated or aromatic heterocyclic group having at least one hetero N atom; and wherein monomer Y is an ethylenically unsaturated compound selected from carboxylic acids, carboxylic acid salts, carboxylic acid esters, organosulfuric acids, organosulfuric acid salts, sulfonic acids, sulfonic acid salts, phosphonic acids, phosphonic acid salts, vinyl esters, (meth)acrylamides, C₈-C₂₀ aromatic monomers containing at least one exocyclic ethylenic unsaturation and combinations thereof; and (b) an epoxy resin. The invention is further directed to a method for treating fabric by contacting the fabric with the composition.

The term "copolymer" as used herein and in the appended claims refers to polymers polymerized from at least two different monomers. All percentages herein are by weight, unless specified otherwise. Percentages of monomers are based on total copolymer weight.

The term "aqueous" as used herein and in the appended claims means water and mixtures composed substantially of water and water miscible solvents.

The use of the term "(meth)" followed by another term such as acrylic, acrylate, acrylamide, etc., as used herein and in the appended claims, refers to, for example, both acrylic and methacrylic; acrylate and methacrylate; acrylamide and methacrylamide; etc.

The glass transition temperature ("Tg") for the copolymers of the present invention may be measured by differential scanning calorimetry (DSC) taking the mid-point in the heat flow versus temperature transition as the Tg value.

In some embodiments of the present invention, the copolymer comprises at least 15 wt% of monomer X derived units. In some aspects of these embodiments, the copolymer comprises at least 20 wt% of monomer X derived units. In some aspects of these embodiments, the copolymer comprises at least 25 wt% of monomer X derived units. In some aspects of these embodiments, the copolymer comprises at least 30 wt% of monomer X derived units. In some aspects of these embodiments, the copolymer comprises at least 35 wt% of monomer X derived units, alternatively at least 40 wt%. In some aspects of these embodiments, the copolymer comprises no more than 60 wt% of monomer X derived units, alternatively no more than 55 wt%, alternatively no more than 50 wt%.

In some embodiments of the present invention, monomer X is selected from vinylimidazoles, vinylimidazolines, vinylpyridines, vinylpyrroles, derivatives thereof and combinations thereof. In some aspects of these embodiments, monomer X is selected from vinylimidazoles, vinylpyridines, derivatives thereof and combinations thereof. In some aspects of these embodiments, monomer X is selected from N-vinylimidazole, 2-vinylpyridine, 4-vinylpyridine and combinations thereof. In some aspects of these embodiments, monomer X is N-vinylimidazole (VI).

In some embodiments of the present invention, monomer Y is selected from carboxylic acids, carboxylic acid salts, carboxylic acid esters, organosulfuric acids, organosulfuric acid salts, sulfonic acids, sulfonic acid salts, phosphonic acids, phosphonic acid salts, vinyl esters, (meth)acrylamides, C₈-C₂₀ aromatic monomers containing at least one exocyclic ethylenic unsaturation and combinations thereof. In some aspects of these embodiments, monomer Y is selected from carboxylic acids, carboxylic acid esters (e.g., alkyl (meth)acrylates), (meth)acrylamides, C₈-C₂₀ aromatic monomers containing at least one exocyclic ethylenic unsaturation and combinations thereof. In some aspects of these embodiments, monomer Y is selected from acrylic acid (AA), methacrylic acid, itaconic acid, maleic acid, fumaric acid, methyl (meth)acrylate, ethyl (meth)acrylate, propyl (meth)acrylate, isopropyl acrylate, n-butyl (meth)acrylate, isobutyl (meth)acrylate, 2-ethylhexyl (meth)acrylate, decyl (meth)acrylate, lauryl (meth)acrylate, stearyl (meth)acrylate, styrene, vinyltoluene, α-methylstyrene and combinations thereof. In some aspects of these embodiments, monomer Y comprises at least one C₂-C₈ alkyl (meth)acrylate, alternatively n-butyl (meth)acrylate, alternatively monomer Y comprises n-butyl acrylate (BA) and acrylic acid.

In some embodiments of the present invention, the method uses a copolymer comprising polymerized units of a monomer X and a monomer Y; wherein the copolymer comprises at least 15 wt% of monomer X derived units; wherein monomer X is selected from vinylimidazoles, vinylimidazolines, vinylpyridines, vinylpyrroles, derivatives thereof and combinations thereof; and wherein monomer Y is selected from carboxylic acids, carboxylic acid salts, carboxylic acid esters, organosulfuric acids, organosulfuric acid salts, sulfonic acids, sulfonic acid salts, phosphonic acids, phosphonic acid salts, vinyl esters, (meth)acrylamides, C₈-C₂₀ aromatic monomers containing at least one exocyclic ethylenic unsaturation and combinations thereof. In some aspects of these embodiments, the copolymer comprises no more than 5 wt% of units derived from ethylenically unsaturated monomer containing an epoxide function. In some aspects of these embodiments, the copolymer comprises no more than 1 wt% of units derived from ethylenically unsaturated monomer containing an epoxide function. In some aspects of these embodiments, the copolymer comprises no more than 0.5 wt% of units derived from ethylenically unsaturated monomer containing an epoxide function. In some aspects of these embodiments, the copolymer comprises no more than 0.1 wt% of units derived from ethylenically unsaturated monomer containing an epoxide function. In some aspects of these embodiments, the copolymer comprises no more than 0.05 wt% of units derived from ethylenically unsaturated monomer containing an epoxide function.

In some embodiments of the present invention, the composition comprising a copolymer has a pH of at least 4, alternatively at least 5, alternatively at least 6. In some aspects of these embodiments, the composition has a pH no greater than 10. In some aspects of these embodiments, the composition has a pH of at least 8. In some aspects of these embodiments, the composition has a pH of 8-10. In some aspects of these embodiments, the composition has a pH of at least 9. In some aspects of these embodiments, the composition has a pH of 9-10.

In some embodiments of the present invention, the composition comprises a latex copolymer which has at least 20 wt% solids. In some aspects of these embodiments, the latex copolymer comprises at least 25 wt% solids. In some aspects of these embodiments, the latex copolymer comprises at least 30 wt% solids.

In some embodiments of the present invention, the composition comprises from 35 to 55 wt% of polymerized units derived from monomer X and 35 to 55 wt% of polymerized units derived from monomer Y. In some aspects of these embodiments, the composition comprises from 40 to 50 wt% of polymerized units derived from monomer X and 40 to 50 wt% of polymerized units derived from monomer Y.

In some embodiments of the present invention, the composition comprises polymerized units derived from a crosslinker. Crosslinkers suitable for use with the present invention include multi-ethylenically unsaturated monomers. In some aspects of these embodiments, the crosslinker derived units are derived from crosslinker selected from 1,4-butanediol diacrylate; 1,4-butanediol dimethacrylate; 1,6-hexanediol diacrylate; 1,1,1-trimethylol propane triacrylate; 1,1,1-trimethylol propane trimethacrylate; allyl methacrylate; divinylbenzene; and N-allyl acrylamide. In some aspects of these embodiments, the crosslinker derived units are derived from crosslinker selected from 1,1,1-trimethylol propane trimethacrylate. In some aspects of these embodiments, the composition comprises 0.01 to 10 wt% (based on solids) crosslinker. In some aspects of these embodiments, the composition comprises 0.01 to 5 wt% (based on solids) crosslinker. In some aspects of these embodiments, the composition comprises 0.01 to 1 wt% (based on solids) crosslinker.

In some embodiments of the invention, the copolymer comprises from 1 wt% to 50 wt% silver, based on total copolymer weight including silver, alternatively from 2 wt% to 40 wt%, alternatively from 3 wt% to 20 wt%, alternatively from 5 wt% to 15 wt%. Silver is in the form of Ag(I) ion, which typically is introduced in the form of silver nitrate. Methods for preparation of the copolymer have been disclosed previously, e.g., in U.S. Pat. Appl. Pub. No. US 2005/0227895. In some embodiments of the invention, to increase retention of silver by the treated fabric, additional copolymer is added which is not complexed with silver; and/or other amine compounds or polymers may be added.

In some embodiments of the invention, the epoxy resin comprises at least a difunctional epoxy compound, i.e., a compound having at least two epoxy groups per molecule. In some aspects of these embodiments, the epoxy resin comprises bis-glycidyl ethers or esters, triglycidyl isocyanurate, 1-epoxyethyl-3,4-epoxycyclohexane, vinylcyclohexene dioxide, diglycidyl esters of dicarboxylic acids, diglycidyl ethers of diols or polyols. Suitable examples of bis-glycidyl esters and ethers include bisphenol A diglycidyl ether, diglycidyl adipate; 1,4-diglycidyl butyl ether; ethylene glycol diglycidic ether; glycidyl ethers of glycerol, erythritol, pentaerythritol, and sorbitol; epoxy resorcinol ethers; and diglycidyl ethers of polyethylene glycols. In some embodiments of the invention, the epoxy resin comprises a polymer of glycidyl (meth)acrylates and/or allyl glycidyl ether. In some embodiments of the invention, the epoxy resin is present in an amount that results in a 0.1:1 to 10:1 ratio of equivalents epoxide:equivalents X monomer unit. Preferably, the ratio is at least 0.2:1, alternatively at least 0.3:1, alternatively at least 0.5:1, alternatively at least 0.8:1. Preferably, the ratio is no more than 7:1, alternatively no more than 5:1, alternatively no more than 4:1.

In some embodiments of the invention, an amine curing agent in addition to the copolymer is used. Such amine curing agents are well known in the art and are described, e.g., in WO 2005/080481. These curing agents include polyfunctional primary and secondary amines and some tertiary amines, including amine-containing polymers.

Fabric material suitable for treatment according to this invention includes, e.g., silk, cotton, wool, flax, fur, hair, cellulose, ramie, hemp, linen, wood pulp, polyolefins, such as polyethylene, polypropylene and polybutylene; halogenated polymers, such as polyvinyl chloride; polyaramids, such as poly-p-phenyleneteraphthalamid (e.g. KEVLAR® fibers available from DuPont), poly-m-phenyleneteraphthalamid (e.g., NOMEX® fibers available from DuPont); melamine and melamine derivatives (e.g., BASOFIL® fibers available from Basofil Fibers, LLC); polyesters, such as polyethylene terephthalate, polyester/polyethers; polyamides, such as nylon 6 and nylon 6,6; polyurethanes, such as TECOPHILIC® aliphatic thermoplastic polyurethanes available from Noveon; acetates; rayon acrylics; and combinations thereof. Preferred fabrics include cotton, polyester, cotton-polyester blends and polyolefins.

Some embodiments of the present invention will now be described in detail in the following Examples. All fractions and percentages set forth below in the Examples are by weight unless otherwise specified.

General Sample Preparation Procedure: The wet pick-up of the substrate to be treated was determined using standard tap water. The measured wet pick-up was used to determine the amount of silver-containing copolymer required in the bath solution to provide the desired dry treatment level on the substrate. The appropriate weight of silver-containing copolymer was added to tap water that was pH adjusted using 28% NH₄OH to a pH of 9.5-9.9, prior to the addition of the silver-containing copolymer. Other ingredients were added at appropriate levels - the solution was mixed using a standard air mixer until homogeneous. The substrate to be treated was passed through the bath solution and then passed through two nips rolls to express excess solution. The treated substrate is tentered and dried 2 min @ 149°C. The treated, dried substrate is washed as noted, and then submitted for Ag content and/or efficacy testing.

Samples were prepared with a silver-containing copolymer which had 45 wt% BA monomer units, 45 wt% VI monomer units and 10% AA monomer units, and which contained 11% silver, and/or with EPI-REZ™ 3510-W-60 bisphenol A glycidyl ether dispersion ("ER 3510-W-60", 185-215 equiv. wt. per epoxide, solids basis, available from Hexion, Inc.) or DOW CORNING Z-6040 ("Z-6040", epoxysilane polymer) added to the treatment water, as indicated in the tables. The amount of epoxy resin was measured in equivalents epoxy group/equivalent of VI unit in the silver-containing copolymer. The fabric substrate used for the testing was 65% polyester:35% cotton woven @ 2.5 oz/yd² (85 g/m²) basis weight.

**Table 1 - Various Levels of Silver-Containing Copolymer vs Various Levels of Epoxy-Containing Polymer: Silver Retention Values**

| Wash Cycles¹ | Ag Content, ppm | | % Ag Retained | Epoxy Polymer |
|---|---|---|---|---|
| | Target | Actual | | |
| 0 | 0 | nd | NA | No Treatment |
| 0 | 300 | 398 | NA | silver-copolymer only |
| 2 | 300 | 3 | 1 | silver-copolymer only |
| 0 | 300 | 266 | NA | ER 3510-W-60 @ 0.8 EQ/VI |
| 2 | 300 | 134 | 50 | ER 3510-W-60 @ 0.8 EQ/VI |
| 10 | 300 | 37 | 14 | ER 3510-W-60 @ 0.8 EQ/VI |
| 0 | 300 | 298 | NA | ER 3510-W-60 @ 1.6 EQ/VI |
| 2 | 300 | 139 | 47 | ER 3510-W-60 @ 1.6 EQ/VI |
| 10 | 300 | 51 | 17 | ER 3510-W-60 @ 1.6 EQ/VI |
| 0 | 300 | 305 | NA | ER 3510-W-60 @ 3.2 EQ/VI |
| 2 | 300 | 156 | 51 | ER 3510-W-60 @ 3.2 EQ/VI |
| 10 | 300 | 50 | 16 | ER 3510-W-60 @ 3.2 EQ/VI |
| 0 | 300 | 286 | NA | ER 3510-W-60 @ 16 EQ/VI |
| 2 | 300 | 136 | 48 | ER 3510-W-60 @ 16 EQ/VI |
| 10 | 300 | 52 | 18 | ER 3510-W-60 @ 16 EQ/VI |
| 0 | 300 | 225 | NA | Z-6040 @ 0.8% on bath wt. |
| 2 | 300 | 124 | 55 | Z-6040 @ 0.8% on bath wt. |
| 10 | 300 | 30 | 13 | Z-6040 @ 0.8% on bath wt. |
| 0 | 300 | 247 | NA | Z-6040 @ 1.0% on bath wt. |
| 2 | 300 | 124 | 50 | Z-6040 @ 1.0% on bath wt. |
| 10 | 300 | 48 | 19 | Z-6040 @ 1.0% on bath wt. |
| 0 | 300 | 243 | NA | Z-6040 @ 2.0% on bath wt. |
| 2 | 300 | 135 | 56 | Z-6040 @ 2.0% on bath wt. |
| 10 | 300 | 48 | 20 | Z-6040 @ 2.0% on bath wt. |

| | | | | |
|---|---|---|---|---|
| ¹AATCC Method 61 Type 2A wash using LAUNDER-OMETER^{®}; 1 cycle simulates 5 home machine washings | | | | |

Other silane polymers obtained from Dow Coming and having amine, methyl methacrylate or vinylbenzene functionality, but no epoxy functionality, produced treated fabric having much lower silver retention than the Z-6040 epoxy material.

**Table 2 - Silver Retention with Lower Levels of ER 3510-W-60**

| Wash Cycles¹ | Ag Content, ppm | | % Ag Retained | Treatment |
|---|---|---|---|---|
| | Target | Actual | | |
| 0 | 300 | 0.6 | NA | No Treatment |
| 0 | 300 | 275 | NA | ER 3510-W-60 @ 0.25 EQ/VI |
| 2 | 300 | 80 | 29 | ER 3510-W-60 @ 0.25 EQ/VI |
| 4 | 300 | 59 | 21 | ER 3510-W-60 @ 0.25 EQ/VI |
| 10 | 300 | 30 | 11 | ER 3510-W-60 @ 0.25 EQ/VI |
| 0 | 300 | 277 | NA | ER 3510-W-60 @ 0.5 EQ/VI |
| 2 | 300 | 101 | 36 | ER 3510-W-60 @ 0.5 EQ/VI |
| 4 | 300 | 76 | 27 | ER 3510-W-60 @ 0.5 EQ/VI |
| 10 | 300 | 41 | 15 | ER 3510-W-60 @ 0.5 EQ/VI |
| 0 | 300 | 318 | NA | ER 3510-W-60 @ 1.0 EQ/VI |
| 2 | 300 | 126 | 40 | ER 3510-W-60 @ 1.0 EQ/VI |
| 4 | 300 | 94 | 30 | ER 35 10-W-60 @ 1.0 EQ/V1 |
| 10 | 300 | 55 | 17 | ER 3510-W-60 @ 1.0 EQ/VI |

| | | | | |
|---|---|---|---|---|
| ¹AATCC Method 61 Type 2A | | | | |

**Table 3 - Silver Retention when Washed using Bleach**

| Wash Cycles¹ | Ag Content, ppm | | % Retained | Treatment |
|---|---|---|---|---|
| | Target | Actual | | |
| 0 | 300 | | NA | No Treatment |
| 0 | 300 | 321 | NA | ER 3510-W-60 @ 0.25 EQ/VI |
| 2 | 300 | 109 | 34 | ER 3510-W-60 @ 0.25 EQ/VI |
| 4 | 300 | 56 | 17 | ER 3510-W-60 @ 0.25 EQ/VI |
| 10 | 300 | 11 | 3 | ER 3510-W-60 @ 0.25 EQ/VI |
| 0 | 300 | 284 | NA | ER 3510-W-60 @ 0.5 EQ/VI |
| 2 | 300 | 139 | 49 | ER 3510-W-60 @ 0.5 EQ/VI |
| 4 | 300 | 85 | 30 | ER 3510-W-60 @ 0.5 EQ/VI |
| 10 | 300 | 30 | 11 | ER 3510-W-60 @ 0.5 EQ/VI |
| 0 | 300 | 283 | NA | ER 3510-W-60 @ 1.0 EQ/VI |
| 2 | 300 | 152 | 54 | ER 3510-W-60 @ 1.0 EQ/VI |
| 4 | 300 | 94 | 33 | ER 3510-W-60 @ 1.0 EQ/VI |
| 10 | 300 | 50 | 18 | ER 3510-W-60 @ 1.0 EQ/VI |

| | | | | |
|---|---|---|---|---|
| ¹AATCC Method 61 Type 5A | | | | |

**Table 4 - Effect of Additional Uncomplexed Copolymer on Silver Retention**

| Wash Cycles¹ | Ag Content, ppm | | % Retained | Description |
|---|---|---|---|---|
| | Target | | | |
| 0 | 300 | nd | 0 | No Treatment |
| 0 | 300 | 369 | Not Applicable | ER 3510-W-60 @ 0.34 EQ/VI (latex copolymer of 70BA/30VI, 0.6% on bath wt., dry basis) |
| 2 | 300 | 249 | 68 | |
| 4 | 300 | 261 | 71 | |
| 10 | 300 | 254 | 69 | |
| 0 | 300 | 391 | Not Applicable | ER 35 10-W-60 @ 5 EQ/VI (latex copolymer of 70BA/30VI, 0.6% on bath wt., dry basis) |
| 2 | 300 | 301 | 77 | |
| 4 | 300 | 247 | 63 | |
| 10 | 300 | 274 | 70 | |
| 0 | 300 | 400 | Not Applicable | ER 3510-W-60 @ 1.5 EQ/VI (no additional copolymer) |
| 2 | 300 | 170 | 43 | |
| 4 | 300 | 174 | 44 | |
| 10 | 300 | 110 | 28 | |

| | | | | |
|---|---|---|---|---|
| ¹AATCC Method 61 Type 2A | | | | |

## Claims

1. A composition useful for treating fabric; said composition comprising:
(a) a silver-containing copolymer comprising polymerized units of a monomer X and a monomer Y;
wherein monomer X is an ethylenically unsaturated compound having a substituent group selected from an unsaturated or aromatic heterocyclic group having at least one hetero atom selected from N, O and S;
wherein monomer Y is an ethylenically unsaturated compound selected from carboxylic acids, carboxylic acid salts, carboxylic acid esters, organosulfuric acids, organosulfuric acid salts, sulfonic acids, sulfonic acid salts, phosphonic acids, phosphonic acid salts, vinyl esters, (meth)acrylamides, C₈-C₂₀ aromatic monomers containing at least one exocyclic ethylenic unsaturation and combinations thereof; and
(b) an epoxy resin.

2. The composition of claim 1, wherein monomer X is N-vinylimidazole and monomer Y comprises at least one alkyl (meth)acrylate.

3. The composition of claim 2, wherein the copolymer comprises 5 wt% to 15 wt% silver, based on total copolymer weight.

4. The composition of claim 3, wherein the copolymer comprises 35 to 55 wt% of units derived from monomer X and 35 to 55 wt% of units derived from monomer Y.

5. The composition of claim 4, wherein monomer Y comprises n-butyl acrylate and acrylic acid.

6. The composition of claim 3, wherein the epoxy resin is a di-glycidyl ether of bisphenol A.

7. A method of treating fabric, said method comprising contacting the fabric with the composition of claim 1.

8. The method of claim 7, wherein monomer X is N-vinylimidazole and monomer Y comprises at least one alkyl (meth)acrylate.

9. The method of claim 8, wherein the copolymer comprises 5 wt% to 15 wt% silver, based on total copolymer weight.

10. The method of claim 9, wherein monomer Y comprises n-butyl acrylate and acrylic acid.

## Patentansprüche

1. Zusammensetzung, verwendbar für die Behandlung von Gewebe; die Zusammensetzung umfassend:
(a) ein silberhaltiges Copolymer, umfassend polymerisierte Einheiten eines Monomers X und eines Monomers Y;
wobei Monomer X eine ethylenisch ungesättigte Verbindung ist, die eine Substituentengruppe, ausgewählt aus einer ungesättigten oder aromatischen heterocyclischen Gruppe mit mindestens einem Heteroatom, ausgewählt aus N, O und S, aufweist;
wobei Monomer Y eine ethylenisch ungesättigte Verbindung ist, ausgewählt aus Carbonsäuren, Carbonsäuresalzen, Carbonsäureestern, Organoschwefelsäuren, Organoschwefelsäuresalzen, Sulfonsäuren, Sulfonsäuresalzen, Phosphonsäuren, Phosphonsäuresalzen, Vinylestern, (Meth)acrylamiden, C₈-C₂₀ aromatischen Monomeren, enthaltend mindestens eine exocyclische ethylenische Ungesättigtheit, und Kombinationen davon; und
(b) ein Epoxidharz.

2. Zusammensetzung nach Anspruch 1, wobei Monomer X N-Vinylimidazol ist und Monomer Y mindestens ein Alkyl(meth)acrylat umfasst.

3. Zusammensetzung nach Anspruch 2, wobei das Copolymer 5 Gew.-% bis 15 Gew.-% Silber, bezogen auf das Copolymer-Gesamtgewicht, umfasst.

4. Zusammensetzung nach Anspruch 3, wobei das Copolymer 35 bis 55 Gew.-% von Einheiten, abgeleitet von Monomer X, und 35 bis 55 Gew.-% von Einheiten, abgeleitet von Monomer Y, umfasst.

5. Zusammensetzung nach Anspruch 4, wobei Monomer Y n-Butylacrylat und Acrylsäure umfasst.

6. Zusammensetzung nach Anspruch 3, wobei das Epoxidharz ein Diglycidylether von Bisphenol A ist.

7. Verfahren zur Gewebebehandlung, wobei das Verfahren das Inkontaktbringen des Gewebes mit der Zusammensetzung nach Anspruch 1 umfasst.

8. Verfahren nach Anspruch 7, wobei Monomer X N-Vinylimidazol ist und Monomer Y mindestens ein Alkyl(meth)acrylat umfasst.

9. Verfahren nach Anspruch 8, wobei das Copolymer 5 Gew.-% bis 15 Gew.-% Silber, bezogen auf das Copolymer-Gesamtgewicht, umfasst.

10. Verfahren nach Anspruch 9, wobei Monomer Y n-Butylacrylat und Acrylsäure umfasst.

## Revendications

1. Composition utile pour traiter un tissu ; ladite composition comprenant :
(a) un copolymère contenant de l'argent comprenant des unités polymérisées d'un monomère X et d'un monomère Y ;
dans laquelle le monomère X est un composé éthyléniquement insaturé présentant un groupe substituant choisi parmi un groupe hétérocyclique insaturé ou aromatique ayant au moins un hétéroatome choisi parmi N, O et S ;
dans laquelle le monomère Y est un composé éthyléniquement insaturé choisi parmi des acides carboxyliques, des sels d'acides carboxyliques, des esters d'acides carboxyliques, des acides organosulfuriques, des sels d'acidesorganosulfuriques, des acides sulfoniques, des sels d'acides sulfoniques, des acides phosphoniques, des sels d'acidesphosphoniques, des esters vinyliques, des (méth)acrylamides, des monomères aromatiques en C₈-C₂₀ contenant au moins une insaturation éthylénique exocyclique et des combinaisons de ceux-ci ; et
(b) une résine époxy.

2. Composition selon la revendication 1, dans laquelle le monomère X est le N-vinylimidazole et le monomère Y comprend au moins (méth)acrylate d'alkyle.

3. Composition selon la revendication 2, dans laquelle le copolymère comprend de 5 % en masse à 15 % en masse d'argent, rapporté à la masse totale du copolymère.

4. Composition selon la revendication 3, dans laquelle le copolymère comprend de 35 à 55 % en masse d'unités dérivées du monomère X et de 35 à 55 % en masse d'unités dérivées du monomère Y.

5. Composition selon la revendication 4, dans laquelle le monomère Y comprend de l'acrylate de n-butyle et de l'acide acrylique.

6. Composition selon la revendication 3, dans laquelle la résine époxy est un di-glycidyléther de bisphénol A.

7. Procédé de traitement d'un tissu, ledit procédé comprenant la mise en contact du tissu avec la composition selon la revendication 1.

8. Procédé selon la revendication 7, dans lequel le monomère X est le N-vinylimidazole et le monomère Y comprend au moins un (méth)acrylate d'alkyle.

9. Procédé selon la revendication 8, dans lequel le copolymère comprend de 5 % en masse à 15 % en masse d'argent, rapporté à la masse totale du copolymère.

10. Procédé selon la revendication 9, dans lequel le monomère Y comprend de l'acrylate de n-butyle et de l'acide acrylique.
